# EUROPEAN PATENT SPECIFICATION

(11) **EP 2 423 166 B1**
(45) Date of publication and mention of the grant of the patent: **02.07.2014**
(21) Application number: 10767194.3
(22) Date of filing: 21.04.2010
(51) Int. Cl.: C01G 9/00, C01G 15/00, C01G 23/00, C01G 49/00, C08K 7/00, C08L 101/00, H01B 1/08, H01B 1/20, H01B 5/00, C01G 9/02

(54) **COLUMNAR ZINC OXIDE PARTICLES AND METHOD FOR PRODUCING SAME**
SÄULENFÖRMIGE ZINKOXIDPARTIKEL UND HERSTELLUNGSVERFAHREN DAFÜR
PARTICULES D'OXYDE DE ZINC COLUMNAIRES ET LEUR PROCÉDÉ DE FABRICATION

(30) Priority: 22.04.2009 JP 2009103691
(43) Date of publication of application: 29.02.2012
(73) Proprietor: KYOWA CHEMICAL INDUSTRY CO., LTD., Kagawa-ken 761-0113 (JP)
(72) Inventor: TAKABATAKE Harumi, Sakaide-shi KAGAWA 762-0012 (JP)
(74) Representative: Duckworth, Timothy John
(86) International application number: PCT/JP2010/057519
(87) International publication number: WO 2010/123142

(56) References cited:
- EP-A1- 0 598 284
- JP-A- 3 060 429
- JP-A- 5 017 298
- JP-A- 7 002 519
- JP-A- 7 328 421
- JP-A- 9 188 517
- JP-A- 56 069 266
- JP-A- 2005 064 281
- JP-A- 2008 222 490
- US-A- 5 132 104
- US-A- 5 171 364
- DATABASE WPI Week 200874 Thomson Scientific, London, GB; AN 2008-M54451 XP002671712, & JP 2008 222490 A (TOYOTA CHUO KENKYUSHO KK) 25 September 2008 (2008-09-25)

## Description

### Technical Field

This invention relates to novel zinc oxide particles. More specifically, it relates to columnar zinc oxide particles useful as a thermal conductivity improving agent or electrical conductivity improving agent.

### Background Art

It is general practice to incorporate various improving agents to a resin composition containing a rubber or plastic in order to improve the physical properties of the resin composition.

As thermal conductivity improving agents, for example, there are known crystalline silica, magnesium oxide, boron nitride, aluminum nitride, aluminum oxide, beryllia, etc. As electrical conductivity improving agents, there are known tin oxide, zinc oxide, carbon black, titanium oxide coated with tin oxide, etc. As is well known, in order to impart good conductivity to a composition, a large amount of electrical conductivity improving agents need to be compounded with the composition, so that the improving agents come into contact with one another, and expensive electrical conductivity improving agents have limits in use. Carbon black is inexpensive as an electrical conductivity improving agent, while it is limited to a use where the color is black, and it sometimes scatters in a molding step to soil a production site. As an electrical conductivity improving agent to be mixed with a resin composition, there is a demand for a white electrical conductivity improving agent that can provide any colors to a base material as required.

Therefore, zinc oxide that is relatively less expensive and free of toxicity and is chemically stable is recently widely used as a thermal conductivity improving agent or electrical conductivity improving agent.

In recent years, as functional composite materials are of growing interest, improving agents are actively improved, and there are various studies made not only on the functions of materials of the improving agents but also on the forms of the improving agents.

Zinc oxide has the form of spheres, mass, plates, scales, needles, tetrapods, sea urchin or ultrafine particles. Of these forms, zinc oxide having the form of needles or tetrapods, which form is considered to form a network easily in a resin composition even when it is used in a small amount, has been proposed as a thermal conductivity improving agent or electrical conductivity improving agent.

For example, Patent Documents 1, 2 and 3 propose zinc oxide particles obtained by mixing needle-shaped zinc oxide with a dopant such as Al, Ge, Ga, Sn and In, and then reduction-calcining the mixture. However, these zinc oxide particles are needle-shaped and thin, and they are easily broken when kneaded with a resin. Particles broken make it difficult to form a network in a resin composition, and they cannot fully exhibit electrical conductivity or thermal conductivity.

Further, Patent Document 4 discloses a method for producing zinc oxide particles having the form of a fine powder, in which an aqueous solution containing water-soluble zinc salt and water-soluble metal salt that can be converted to aluminum oxide, gallium oxide or indium oxide is neutralized with an alkali or alkali carbonate to obtain a coprecipitation product and the product is pre-calcined and then calcined at 600 to 1,000°C in a nitrogen atmosphere. Since, however, particles obtained by this method have the form of a fine powder and have too small an aspect ratio, the conductivity thereof is not sufficient.

Patent Document 5 proposes a method in which aluminum particles and zinc oxide particles having an average particle diameter of 0.1 to 5 µm are used in combination as thermal conductivity improving agents.

EP 0 598 284 A1 describes a method of preparing electrically conductive zinc oxide with a three-dimensionally branched needle-like shape.

JP 2008-222490 describes a rod-like zinc oxide covered with alumina (sol) for use in a heat conductive resin.

As described above, zinc oxide particles having the form of needles or fine powder has been proposed as an electrical conductivity improving agent or thermal conductivity improving agent. However, the particle form of ideal zinc oxide would be columns rather than fine powder or needles when it is taken into account to resist breaking during kneading with a resin and to form a network easily in a resin.
(Patent Document 1) JP-A 3-60429 (related to US 5,132,104)
(Patent Document 2) JP-A 5-17298
(Patent Document 3) JP-A 7-2519 (related to US 5,171,364)
(Patent Document 4) JP-B 62-35970
(Patent Document 5) JP-A 2005-64281

### Disclosure of the Invention

It is therefore an object of this invention to provide columnar zinc oxide particles that can resist breaking when they are compounded into, and mixed with, a resin and that can impart sufficient thermal conductivity or electrical conductivity. It is also another object of this invention to provide a process for producing the above columnar zinc oxide particles.

It is still another object of this invention to provide a resin composition that contains the above columnar zinc oxide particles and is excellent in thermal conductivity or electrical conductivity.

The present inventor has made diligent studies for a method of obtaining columnar zinc oxide particles. As a result, it has been found that when an aqueous solution containing zinc salt (a) and an aqueous solution of an alkali metal compound (c) react each other, 80% or more of particles obtained after hydrothermal treatment have a columnar form by rendering the amount of the alkali metal compound (c) based on zinc smaller than an equivalent weight and rendering a reaction pH neutral. It has been also found that thus-obtained columnar particles resist breaking and keep their form from collapsing when they are incorporated into, and mixed with, a resin, and this invention has been accordingly completed.

That is, this invention provides zinc oxide particles represented by the following formula (1),

ZnMⁿ⁺_{×}O_{1+n×/2} · aH₂O (1)

wherein Mⁿ⁺ is a trivalent or tetravalent metal, x and "a" satisfy 0.002<x<0.05 and 0≤a<0.5, respectively, and n is a valance of the metal, and having a columnar particle content of 80 % or more
wherein the particles have an average column length of 0.5 to 20 µm, an average column width of 0.25 to 1.5 µm, an average aspect ratio of 2 to 10 and an average columnar degree of 0.7 to 1,
wherein the average columnar degree is the average of columnar degrees measured with regard to 10 or more particles in the field of view magnified 1,000 times or more by means of SEM, wherein the columnar degree is the ratio D₂/D₁ of one end width (diameter) D₂ of a particle to the other end width (diameter) D₁ of the particle.

Further, this invention provides a process for producing the above zinc oxide particles, which comprises the steps of
(I) reacting an aqueous solution containing zinc salt (a) and trivalent or tetravalent metal salt (b) with an aqueous solution containing an alkali metal compound (c) such that the reaction mixture at the end of the reaction has a pH in the range of 5.0 to 7.0,
(II) washing the thus-obtained particles,
(III) emulsifying the washed particles and then hydrothermally treating them, and
(IV) drying the hydrothermally treated particles.

This invention provides calcined particles (A) obtained by calcining the above zinc oxide particles at 300 to 1,100°C in a non-reducing atmosphere. Further, this invention includes a resin composition (A) containing 100 parts by weight of a resin and 150 to 400 parts by weight of the above calcined particles (A).

Further, this invention provides calcined particles (B) obtained by calcining the above zinc oxide particles at 300 to 1,100°C in a reducing atmosphere. Further, this invention includes a resin composition (B) containing 100 parts by weight of a resin and 200 to 400 parts by weight of the above calcined particles (B).

### Brief Description of Drawings

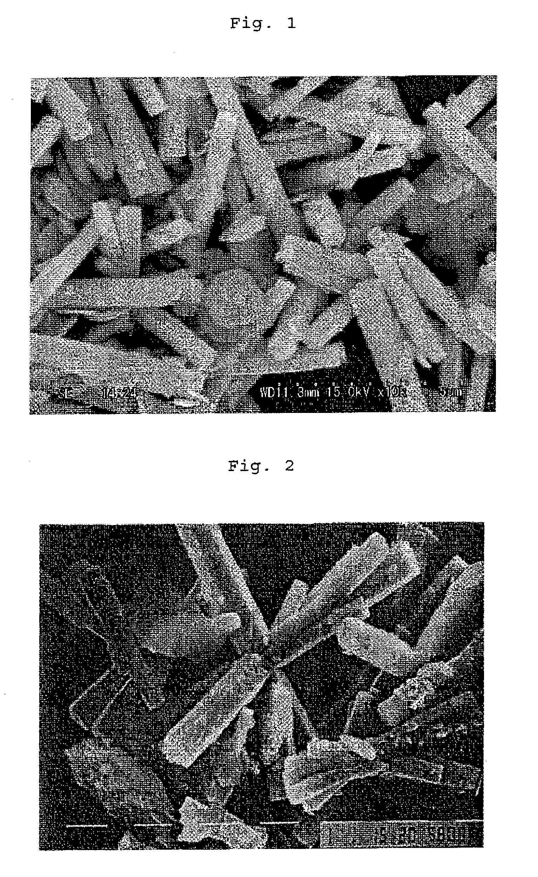

Fig. 1 is an SEM photograph of columnar zinc oxide particles obtained in Synthesis Example 1 of Example 1.
Fig. 2 is an SEM photograph of columnar zinc oxide particles obtained in Synthesis Example 2 of Example 1.

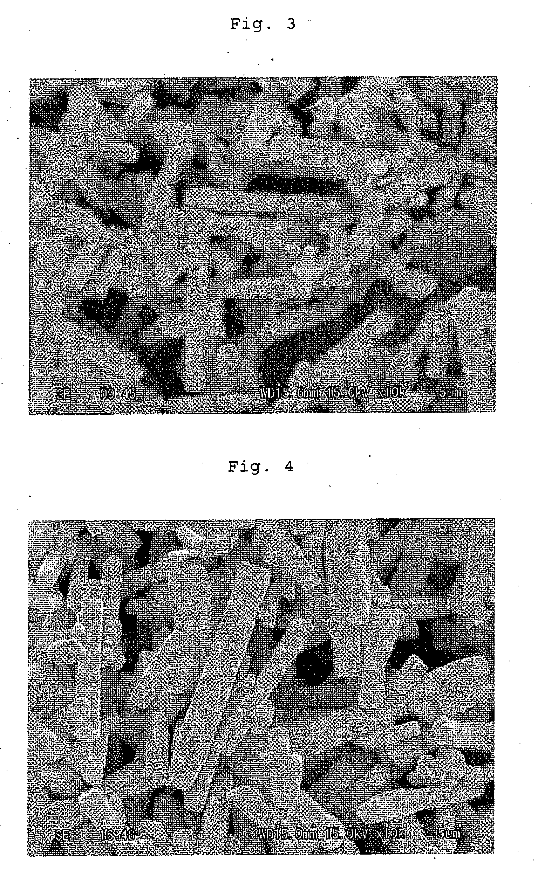

Fig. 3 is an SEM photograph of columnar zinc oxide particles obtained in Synthesis Example 3 of Example 1.
Fig. 4 is an SEM photograph of columnar zinc oxide particles obtained in Synthesis Example 4 of Example 1.

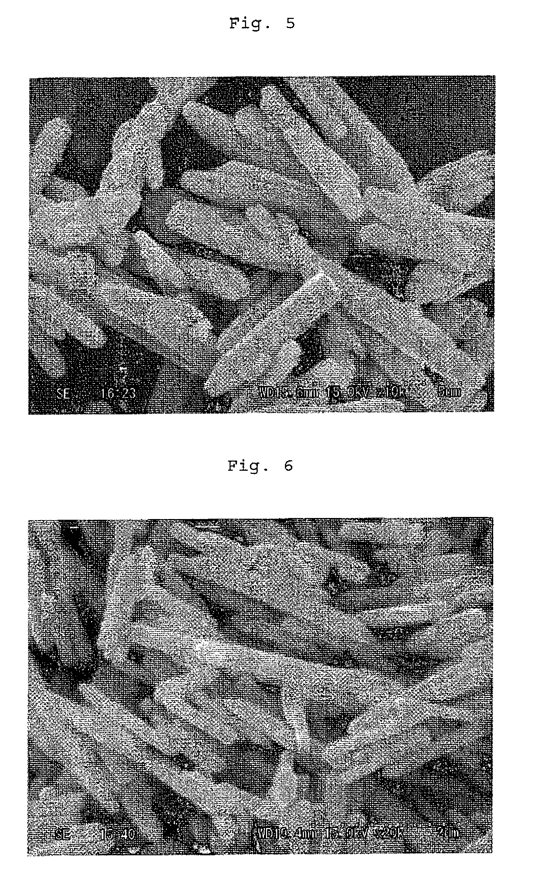

Fig. 5 is an SEM photograph of columnar zinc oxide particles obtained in Synthesis Example 5 of Example 1.
Fig. 6 is an SEM photograph of columnar zinc oxide particles obtained in Synthesis Example 6 of Example 1.

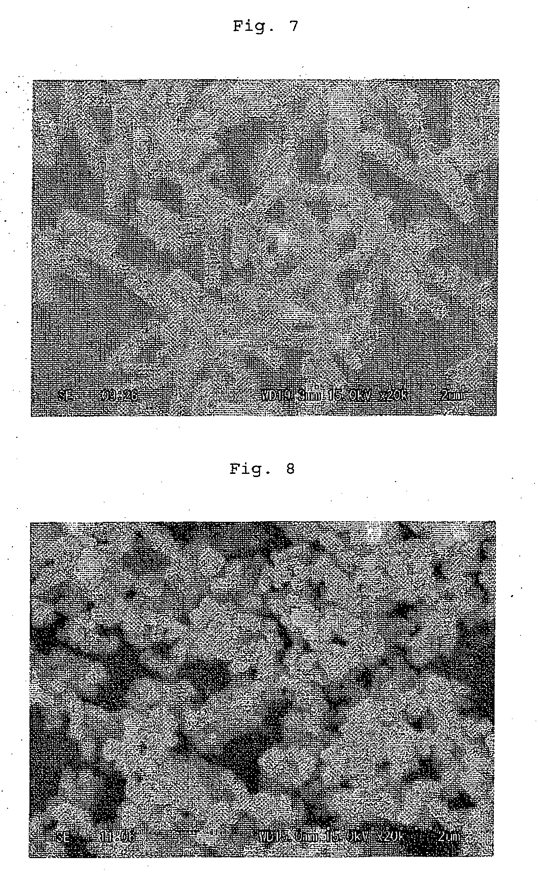

Fig. 7 is an SEM photograph of columnar zinc oxide particles obtained in Synthesis Example 7 of Example 1.
Fig. 8 is an SEM photograph of cubic zinc oxide particles obtained in Comparative Synthesis Example 1 of Example 1.

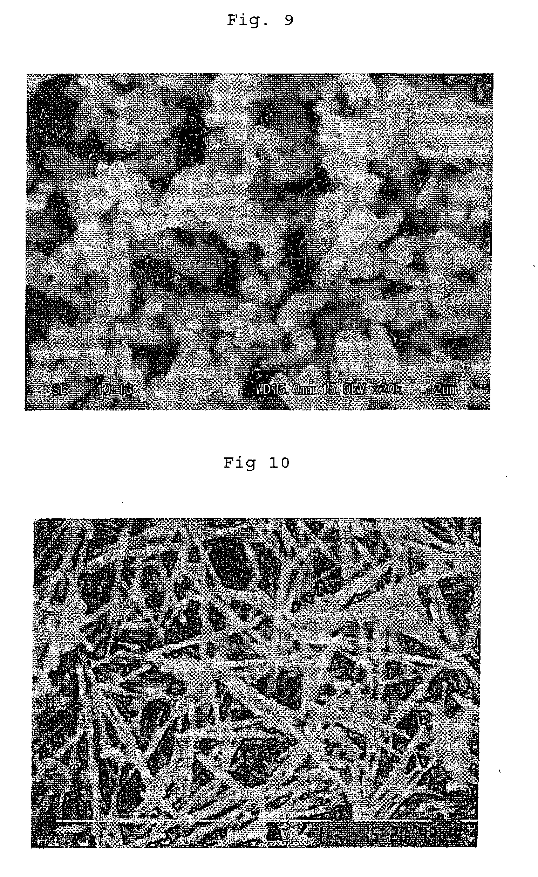

Fig. 9 is an SEM photograph of cubic and columnar zinc oxide particles obtained in Comparative Synthesis Example 2 of Example 1.
Fig. 10 is an SEM photograph of needle-shaped zinc oxide particles obtained in Comparative Synthesis Example 3 of Example 1.

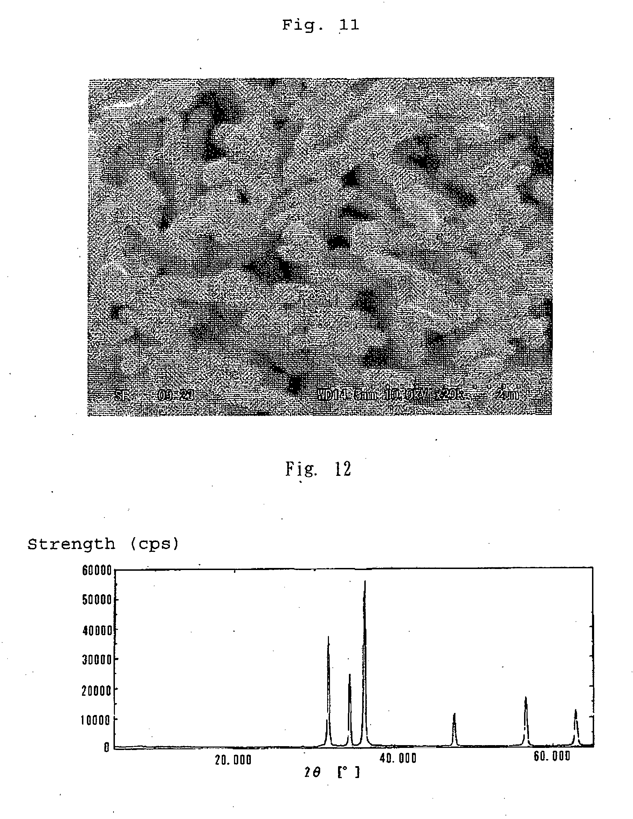

Fig. 11 is an SEM photograph of cubic and columnar zinc oxide particles obtained in Comparative Synthesis Example 4 of Example 1.
Fig. 12 is an X-ray diffraction chart of the columnar zinc oxide particles obtained in Synthesis Example 1 of Example 1.

### Best Modes for Carrying out the Invention

### <Columnar zinc oxide particles>

The zinc oxide particles of this invention have a composition represented by the following formula (1).

ZnMⁿ⁺_{×}O_{1+n×/2} · aH₂O (1)

In the formula (1), Mⁿ⁺ represents a trivalent or tetravalent metal. Mⁿ⁺ includes Al³⁺,Ga³⁺, In³⁺, Ge⁴⁺, Fe³⁺, Cr³⁺, Cr⁴⁺ and Ti⁴⁺. It is preferably Al³⁺ or Fe³⁺.

And, x satisfies 0.002<x<0.05, preferably, 0.004<x<0.02, more preferably, 0.0065<x<0.01, and "a" preferably satisfies 0≤a<10, more preferably, 0≤a<0.5.

### (Columnar form)

The particles of this invention have a columnar form each. The "columnar form" in this invention means that, with regard to at least 10 particles in a field of view magnified 5,000 times by means of SEM, the number of particles having an aspect ratio of 10 or less and a columnar degree in the range of 0.5 to 1 (content of columnar particles) is 80 % or more. The form of each particle of this invention is preferably the form of a square column (pole) or hexagonal column.

### (Average aspect ratio)

In this invention, the aspect ratio refers to a value of a ratio (L/D) of a length (L) of a column to a width (D) or diameter of middle portion of the column. The column length (L) and the column width (D) of a column crystal are measurable by means of a scanning electron microscope (SEM). When the column length (L) and the column width (D) are large, the magnification of SEM should be decreased such that at least 10 particles are inside the field of view, whereby aspect ratios can be measured.

The average aspect ratio is determined as an average of aspect ratios calculated from column lengths (L) and column widths (D) measured with regard to 10 or more particles in the field of view that is magnified 1,000 times or more by means of SEM. The average aspect ratio of the particles of this invention is 2 to 10, more preferably 2 to 6, still more preferably 5 to 6.

### (Average columnar degree)

The ratio (D₂/D₁) of one end width (diameter) D₂ of a particle to the other end width (diameter) D₁ of the particle is referred to as a columnar degree. In this definition, one which has a columnar degree closer to 1 is columnar, and one which has a columnar degree of closer to 0 is needle-shaped. The column width (D) of a columnar crystal can be measured by means of a scanning electron microscope (SEM). When the column width (D) is large, the magnification of SEM should be decreased such that at least 10 particles are inside the field of view, whereby columnar degrees can be measured.

The average columnar degree determined as an average of columnar degrees calculated from one end widths D₁ and the other end width D₂ measured with regard to 10 or more particles in the field of view that is magnified 1,000 times or more by means of SEM. The average columnar degree of the particles of this invention is 0.7 to 1.

The average column length of the particles of this invention is 0.5 to 20 µm, preferably 1 to 10 µm. The average column width of the particles of this invention is 0.25 to 1.5 µm, preferably 0.5 to 1 µm.

The particles of this invention have an average column length of 0.5 to 20 µm, an average column width of 0.25 to 1.5 µm, an average aspect ratio of 2 to 10 and an average columnar degree of 0.7 to 1. The particles of this invention preferably have an average column length of 1 to 10 µm, an average column width of 0.5 to 1 µm, and an average aspect ratio of 2 to 6.

The BET specific surface area of the particles of this invention is preferably 1 to 10 m²/g, more preferably 1 to 7 m²/g.

### <Process for producing particles>

The columnar zinc oxide particles of this invention can be produced by the following steps (I) to (IV).

### (Step (I))

The step (I) is a step in which an aqueous solution containing zinc salt (a) and trivalent or tetravalent metal salt (b) reacting with an aqueous solution containing an alkali metal compound (c) for co-precipitation such that the reaction mixture at the end of the reaction has a pH in the range of 5.0 to 7.0, to obtain particles of a basic zinc compound of the following formula (2).

Zn Mⁿ⁺_{×}(OH)_{y}A^{m-}_{(2+n×-y)/m} · aH₂O (2)

In the formula (2), Mⁿ⁺, x and "a" are as defined in the formula (1).

And, y is 1≤y≤1.6, preferably 1.1≤y≤1.5, more preferably 1.2≤y≤1.4. A^{m-} is an anion selected from the group consisting of Cl⁻, NO₃⁻, SO₄²⁻ and CO₃²⁻, and m is a valence of the anion.

### (Zinc salt (a))

The zinc salt (a) for use as a material in this invention may be any zinc salt so long as it is soluble in water. For example, it can be selected from zinc nitrate, zinc sulfate, zinc chloride and zinc acetate.

### (Trivalent or tetravalent metal salt (b))

The trivalent or tetravalent metal salt (b) for use as a dopant includes salts of aluminum, gallium, indium, germanium, iron (III), chromium, titanium, etc. That is, metal salts such as chlorides, nitrates, sulfates, carbonates, acetates, formates and oxalates, of these metals can be used. It is preferably selected from aluminum sulfate, aluminum chloride, aluminum nitrate, iron nitrate and chromium nitrate.

The trivalent or tetravalent metal salt (b) for use as a dopant may be added to the reaction system after the basic zinc compound of the above formula (2) is formed, while the amount of doping in this case is considerably low. It is hence desirable to mix it with the aqueous solution of the zinc salt (a) beforehand.

When the trivalent or tetravalent metal salt (b) is mixed, or when the aqueous solution of the zinc salt (a) is diluted, zinc hydroxide may be precipitated. Hence, a small amount of an inorganic acid may be added to the aqueous solution of the zinc salt (a) beforehand. The inorganic acid to be added is selected from hydrochloric acid, sulfuric acid, nitric acid, etc.

The amount of the trivalent or tetravalent metal salt (b) for use as a dopant is adjusted such that the amount thereof as metal ion per mole of metal zinc is preferably 0.002 to 0.05 mol, more preferably 0.005 to 0.01 mol. When the amount of the metal salt (b) is too small, undesirably, a columnar crystal does not grow well. When it is too large, undesirably, a large amount of hydrotalcite compound is generated.

### (Alakli metal compound (c))

The alkali metal compound (c) for use as a material includes sodium hydroxide, potassium hydroxide, ammonia, urea, sodium carbonate, sodium bicarbonate, etc. It is preferably sodium hydroxide, potassium hydroxide, sodium carbonate or sodium bicarbonate.

### (Reaction)

In the reaction, the aqueous solution containing the alkali metal compound (c) may be added to the aqueous solution containing the zinc salt (a) and the trivalent or tetravalent metal salt (b), and vice versa. Or, these two aqueous solutions may be added to a reaction vessel containing water at the same time.

It is required to adjust a reaction pH in the reaction for co-precipitation to the vicinity of neutrality. The reaction pH is preferably 5.0 to 7.0, more preferably 5.0 or more but less than 7.0, still more preferably 5.5 to 6.5. The reaction pH depends upon the amount of the alkali to be added. When the reaction pH is higher than 7.0, undesirably, the content of columnar particles after hydrothermal treatment becomes 50 % or less. When the reaction pH is lower than 5.0, undesirably, the yield becomes low.

When the alkali equivalent weight ratio (molar ratio: [NaOH]/[ZnCl₂]) in the reaction is low, a large amount of anions are present as an impurity in the basic zinc compound to generate a large amount of acidic gas during calcining. When 2 mol of an alkali, which is an equivalent weight proportion to 1 mol of zinc, is added, the reaction pH becomes 12 or more, and zinc may be redissolved at the high pH since it is an amphoteric element. For adjusting the reaction pH to the vicinity of neutrality, the amount of the alkali per mole of zinc is preferably adjusted to 1 to 1.6 mol, more preferably, to 1.1 to 1.5 mol, most preferably, to 1.2 to 1.4 mol. The reaction temperature is preferably in the range of 10 to 60°C.

### (Step (II))

The step (II) is the step of washing the above particles. A large amount of salts are contained in a slurry obtained by the reaction, and they are hence removed by washing the particles with water.

### (Step (III))

The step (III) is a step in which the washed particles are emulsified and then hydrothermally treated. In the emulsification, the washed particles are suspended in deionized water, and then the suspension is hydrothermally treated. The temperature for the hydrothermal treatment is preferably 100 to 170°C, more preferably 150 to 170°C. The hydrothermal treatment is carried out preferably for 2 to 24 hours, more preferably for 12 to 20 hours. When the temperature for the hydrothermal treatment is lower than 100°C, undesirably, no crystal grows sufficiently, or no columnar crystal can be obtained. Further, even when the temperature for the hydrothermal treatment is set at 170°C or higher, there is no change in crystal growth degree. By the hydrothermal treatment, columnar zinc oxide particles are obtained. The thus-obtained particles partially contain a basic zinc compound or a hydrotalcite compound.

### (Step (IV))

The step (IV) is the step of drying the hydrothermally treated particles. The drying can be carried out with a natural circulation type dryer, a hot air drying machine, etc. It is sufficient to dry the particles at 105 to 120°C for 10 to 20 hours.

### (Calcined particles (A))

The calcined particles (A) of this invention are represented by the following formula (3).

ZnMⁿ⁺_{×} O_{1+n×/2} (3)

In the formula (3), Mⁿ⁺ and x are as defined in the formula (1). The form of the calcined particles (A) is the same as that of the columnar zinc oxide particles of the formula (1).

The calcined particles (A) of this invention can be obtained by calcining the columnar zinc oxide particles of the above formula (1) in the presence of a non-reducing gas at 300 to 1,100°C, preferably 600 to 900°C. Atmosphere, helium, oxygen, nitrogen, etc are illustrated as non-reducing gas. As a calcining apparatus, any calcining apparatus can be employed so long as it permits heating and calcining in the temperature range of 300 to 1,100°C. Specific examples thereof include a converter, an open hearth furnace, a rotary kiln, a tunnel kiln, a muffle furnace, etc.

The calcined particles (A) of this invention can be used as a thermal conductivity improving agent. Further, the calcined particles (A) of this invention can be used as a thermal conductivity improving agent in combination with other thermal conductivity improving agents such as magnesium oxide, boron nitride, aluminum nitride, aluminum oxide and crystalline silica.

### <Resin composition (A)>

The resin composition (A) of this invention contains 100 parts by weight of a resin and 150 to 400 parts by weight of the calcined particles (A). The content of the calcined particles (A) per 100 parts by weight of the resin is preferably 100 to 500 parts by weight, more preferably 150 to 400 parts by weight.

The resin includes polyolefin resins such as polyethylene, polypropylene and polystyrene, vinyl resins such as polyvinyl chloride and an ethylene-vinyl acetate copolymer, polyester resins such as polyethylene terephthalate and polybutylene terephthalate, polyamide resins such as nylon 6 and nylon 6,6, polyether resins such as polyphenylene oxide, acrylic resins such as polymethyl methacrylate, synthetic rubbers such as styrene-butadiene rubber and acrylonitrile-butadiene rubber, phenolic resins such as a phenol-formaldehyde resin, epoxy resins such as a bisphenol A type epoxy resin and a novolak type epoxy resin, silicone rubber, natural rubber (any molecular weight will do), a polyimide resin, polyphenylene sulfide, an ABS resin, etc.

The resin and the calcined particles (A) can be mixed with a kneading machine such as a kneader, a universal mixer, a roll, etc. In the mixing, preferably, there is employed a method in which a resin composition is extruded in the form of strands with a continuous kneader and then the extrudate is cut to obtain pellets at the same time.

The resin composition (A) of this invention is excellent in thermal conductivity and can be used as a material for radiation fins of heat-generating parts such as a power transistor, a thyristor, a rectifier, a transformer, a heater and IC.

This invention includes a method of improving the thermal conductivity of the resin composition (A) obtained by adding the calcined particles (A) to the resin. Further, this invention includes use of the calcined particles (A) as a thermal conductivity improving agent for the resin.

### <Calcined particles (B)>

The composition formula of the calcined particles (B) of this invention is the same as the above formula (3).

The form of the calcined particles (B) is the same as that of the columnar zinc oxide particles of the formula (1).

The calcined particles (B) of this invention can be obtained by calcining the columnar zinc oxide particles of the above formula (1) in the presence of a reducing gas at 600 to 1,000°C, preferably 700 to 900°C. Hydrogen, carbon monoxide, etc. are illustrated as reducing gas. As a calcining apparatus, any calcining apparatus can be employed so long as it permits heating and calcining in the temperature range of 600 to 1,000°C. Specific examples thereof include a converter, an open hearth furnace, a rotary kiln, a tunnel kiln, a muffle furnace, etc. The calcined particles (B) of this invention can be used as an electrical conductivity improving agent. Further, The calcined particles (B) of this invention can be used as an electrical conductivity improving agent in combination with other electrical conductivity improving agents such as conventionally used electrically conductive zinc oxide.

### <Resin composition (B)>

The resin composition (B) of this invention contains 100 parts by weight of a resin and 200 to 400 parts by weight of the calcined particles (B). The content of the calcined particles (B) per 100 parts by weight of the resin is preferably 100 to 500 parts by weight, more preferably 200 to 300 parts by weight.

The resin includes polyolefin resins such as polyethylene, polypropylene and polystyrene, vinyl resins such as polyvinyl chloride and an ethylene-vinyl acetate copolymer, polyester resins such as polyethylene terephthalate and polybutylene terephthalate, polyamide resins such as nylon 6 and nylon 6,6, polyether resins such as polyphenylene oxide, acrylic resins such as polymethyl methacrylate, synthetic rubbers such as styrene-butadiene rubber and acrylonitrile-butadiene rubber, phenolic resins such as a phenol-formaldehyde resin, epoxy resins such as a bisphenol A type epoxy resin and a novolak type epoxy resin, silicone rubber, natural rubber (any molecular weight will do), a polyimide resin, polyphenylene sulfide, an ABS resin, etc.

The resin and the calcined particles (B) can be mixed with a kneading machine such as a kneader, a universal mixer and a roll. In the mixing, preferably, there is employed a method in which a resin composition is extruded in the form of strands with a continuous kneader and then the extrudate is cut to obtain pellets at the same time.

The resin composition (B) of this invention is excellent in electrical conductivity and is useful as a static electricity preventing agent in electric parts or as an electrical conductivity improving agent in electrically conductive floor coating compositions.

This invention includes a method of improving the electrical conductivity of a resin composition (B) obtained by adding the calcined particles (B) to the resin. Further, this invention includes use of the calcined particles (B) as an electrical conductivity improving agent for the resin.

### (Surface treatment)

The columnar zinc oxide particles of the formula (1), the calcined particles (A) and the calcined particles (B) provided by this invention preferably have at least one coating selected from higher fatty acids, phosphoric esters and fatty acid esters of polyhydric alcohols, anionic surfactants and silane-, titanate- and aluminum-coupling agents on each surface thereof. Owing to the coating, their miscibility of mixing with a resin or rubber can be improved.

For example, there is employed at least one member selected from the group consisting of higher fatty acids, anionic surfactants, phosphoric esters, (silane-, titanate- and aluminum-) coupling agents and esters of polyhydric alcohols and fatty acids.

The higher fatty acids include higher fatty acids having 10 or more carbon atoms such as stearic acid, erucic acid, palmitic acid, lauric acid and behenic acid and alkali metal salts of these.

The anionic surfactants include sulfuric ester salt of higher alcohols such as stearyl alcohol and oleyl alcohol, sulfuric ester salt of polyethylene glycol ether, amide-bonded sulfuric ester salt, ester-bonded sulfuric ester salt, ester-bonded sulfonates, amide-bonded sulfonic acid salts, ether-bonded sulfonic acid salts, ether-bonded alkylarylsulfonic acid salts, ether-bonded alkylarylsulfonic acid salts, amide-bonded alkylarylsulfonic acid salts, etc., and the phosphoric esters include mono- or diesters of orthophophoric acid with oleyl alcohol, stearyl alcohol, etc, mixtures thereof or acid type or alkali metal salts or amine salts of these.

The silane-coupling agents include γ-chloropropyltrimethoxysilane, vinyltrichlorosilane, vinyltriethoxysilane, vinyltrimethoxysilane, vinyl-tris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-mercaptopropyltrimethoxysilane, γ-aminopropyltriethoxysilane, N-β-(aminoethyl)-γ-aminopropyltrimethoxysilane, γ-ureidopropyltriethoxysilane, etc.

The titanate-coupling agents include isopropyltriisostearoyl titanate, isopropyltris(dioctylpyrophosphate) titanate, isopropyltri(N-aminoethyl-aminoethyl) titanate, isopropyltridecylbenzenesulfonyl titanate, etc.

The aluminum-coupling agents include acetoalkoxyaluminum diisopropylate, etc.

The esters of polyhydric alcohols and fatty acids include glycerin monostearate, glycerin monooleate, etc.

The amount of the surface-treating agent can be selected as required, while it is preferred to limit the above amount based on the weight of the columnar zinc oxide particles of the formula (1), the calcined particles (A) or the calcined particles (B) in this invention to approximately 10 % by weight or less. The above surface-treated particles can be converted into a final product form by carrying out, for example, washing with water, dehydration, granulation, drying, pulverization or classification, as required.

The method of the surface treatment with the above surface-treating agent can be carried out by a dry method or wet method that is known per se. For example, the dry method can be carried out by adding the surface-treating agent in the form of a liquid, an emulsion or a solid while the columnar zinc oxide particles or a powder of the columnar zinc oxide particles are/is fully stirred with a kneading machine such as a Henschel mixer and fully mixing then under heat or without heating. The wet method can be carried out by adding the above surface-treating agent in the form of a liquid or an emulsion to the columnar zinc oxide particles or a slurry of the columnar zinc oxide particles in an alcohol, etc., and mechanically fully mixing them at a temperature of up to approximately 100°C. The amount of the surface-treating agent based on the weight of the columnar zinc oxide particles is preferably 0.1 to 10 % by weight, more preferably 0.1 to 5 % by weight.

### Examples

This invention will be specifically explained with reference to Examples hereinafter. Examples used 1st grade reagents supplied by Wako Pure Chemical Industries, Ltd., unless otherwise specified. Properties were measured by the following methods.

### (Measurement apparatus and methods)

### (1) Measurement of BET specific surface area

Method: According to a three-point method
Apparatus: NOVA2000 High speed specific surface area/pore distribution measurement apparatus (Yuasa Ionics, Inc.)

### (2) Observation of particle form by SEM photograph

Apparatus: Scanning electron microscope S-3000N (Hitachi)
Method: Acceleration voltage 15 kV, working distance 10 mm

### (i) Content of columnar particles

With regard to at least 10 particles in a field of view magnified 5,000 times by means of SEM, a ratio of particles having a aspect ratio (%) of 10 or less and a columnar degree in the range of 0.5 to 1 was measured.

### (ii) Average column length

With regard to at least 10 particles in a field of view magnified 1,000 times or more by means of SEM, column lengths (L) were measured and an average thereof was calculated.

### (iii) Average column width

With regard to at least 10 particles in a field of view magnified 1,000 times or more by means of SEM, column widths (D) were measured and an average thereof was calculated.

### (iv) Average aspect ratio

With regard to at least 10 particles in a field of view magnified 1,000 times or more by means of SEM, column lengths (L) and column widths (D) were measured, aspect ratios (L/D) were calculated to obtain an average thereof.

### (v) Average columnar degree

With regard to at least 10 particles in a field of view magnified 1,000 times or more by means of SEM, each of the particles was measured for one end width (diameter) D₁ and the other end width (diameter) D₂, columnar degrees (D₂/D₁) were calculated to obtain an average value thereof.

### (3) Analysis of X-ray diffraction

Apparatus: RINT2200V X-ray diffraction system (supplied by Rigaku Corporation)
Method:CU-Kα, angle (2θ): 5-65°, step: 0.02°, scan speed: 4°/minute, tube voltage: 40 kV, tube current: 20 mV

### (4) Measurement of thermal conductivity

Method: According to a hot desk method pursuant to ISO/CD22007-2
Apparatus: Hot material physical property measuring apparatus TPA-501 (Kyoto Electronics Manufacturing Co., Ltd.): Φ7 mm sensor RTK-7 was used.

### (5) Measurement of powder resistance value

Measurement method: A powder was processed into pellets at 200 kN by using BRIQUETTING PRESS BRE-30 (MAEKAWA), and the measurement was made while attaching probes of a circuit tester (L-22/Yokokawa) to two points that were 1 cm apart from each other.

### (6) Masurement of volume resistivity

Method: According to a double ring electrode method (measured at 23°C and 50 %RH).
Apparatus: R8340 (supplied by ADVANTEST CORPORATION)

### Example 1 (Synthesis of columnar zinc oxide particles) Synthesis Example 1

### (Reaction)

To a zinc chloride aqueous solution-aluminum sulfate aqueous solution mixture liquid having a zinc chloride concentration of 1.011 mol/L and an aluminum sulfate concentration of 0.00505 mol/L was added sodium hydroxide in an amount of an alkali equivalent weight of 1.2, i.e., 1.2 mol of sodium hydroxide per mole of zinc chloride with stirring, and the resultant mixture react with at 25°C for 30 minutes. A reaction slurry had a pH of 5.91.

### (Washing)

The thus-obtained reaction slurry was washed with water.

### (Hydrothermal treatment)

The washed slurry was re-suspended in deionized water and hydrothermally treated at 120°C for 15 hours.

### (Drying)

The thus-obtained product was dehydrated, cleaned and dried to give particles. As a result of X-ray diffraction, it was found that the obtained particles were mixture of zinc oxide with a basic zinc hydroxide compound, and according to a SEM photograph, it was found that each particle was a columnar crystal. Table 1 shows properties of the particles.

### Synthesis Example 2

Particles were obtained in the same manner as in Synthesis Example 1 except that the alkali equivalent weight ratio was changed to 1.4, that the aluminum sulfate was replaced with titanium (IV) sulfate and that the hydrothermal treatment conditions were changed to 170°C and 20 hours. As a result of X-ray diffraction, it was found that the obtained particles were mixture of zinc oxide with a basic zinc hydroxide compound, and according to an SEM photograph, it was found that particle was a columnar crystal. Table 1 shows properties of the particles.

### Synthesis Example 3

Particles were obtained in the same manner as in Synthesis Example 1 except that the alkali equivalent weight ratio was changed to 1.6 and that the aluminum sulfate was replaced with indium (III) acetate. As a result of X-ray diffraction, it was found that the obtained particles were mixture of zinc oxide with a basic zinc hydroxide compound, and according to an SEM photograph, it was found that particle was a columnar crystal. Table 1 shows properties of the particles.

### Synthesis Example 4

### (Reaction)

To a zinc chloride aqueous solution-aluminum sulfate aqueous solution-hydrochloric acid mixture liquid having a zinc chloride concentration of 1.458 mol/L, an aluminum sulfate concentration of 0.00417 mol/L and a hydrochloric acid concentration of 0.025 mol/L was added sodium hydroxide in an amount of 1.2 mol per mole of zinc chloride with stirring, and the resultant mixture react with at 25°C for 30 minutes. A reaction slurry had a pH of 5.97.

### (Cleaning)

The resultant reaction slurry was cleaned by washing it with water.

### (Hydrothermal treatment)

The washed slurry was re-suspended in deionized water and hydrothermally treated at 170°C for 13 hours. The thus-obtained product was dehydrated, cleaned and dried to give particles. As a result of X-ray diffraction, it was found that the obtained particles were mixture of zinc oxide with a basic zinc hydroxide compound, and according to an SEM photograph, it was found that particle was a columnar crystal. Table 1 shows properties of the particles.

### Synthesis Example 5

Particles were obtained in the same manner as in Synthesis Example 4 except that the aluminum sulfate concentration was changed to 0.0073 mol/L and that the aluminum sulfate was replaced with gallium (III) nitrate. As a result of X-ray diffraction, it was found that the obtained particles were mixture of zinc oxide with a basic zinc hydroxide compound, and according to an SEM photograph, it was found that particle was a columnar crystal. Table 1 shows properties of the particles.

### Synthesis Example 6

### (Reaction)

To a zinc chloride aqueous solution-aluminum chloride aqueous solution-hydrochloric acid mixture liquid having a zinc chloride concentration of 1.458 mol/L, an aluminum chloride concentration of 0.0146 mol/L and a hydrochloric acid concentration of 0.025 mol/L was added sodium hydroxide in an amount of 1.4 mol per mole of zinc chloride with stirring, and the resultant mixture was allowed to react at 40°C for 30 minutes. A reaction slurry had a pH of 6.03.

### (Cleaning)

The resultant reaction slurry was cleaned by washing it with water.

### (Hydrothermal treatment)

The washed slurry was re-suspended in deionized water and hydrothermally treated at 170°C for 13 hours.

### (Drying)

The thus-obtained product was dehydrated, cleaned and dried. As a result of analysis of the resultant particles, it was found according to X-ray diffraction that the particles were mixture of zinc oxide with a basic zinc hydroxide compound and it was found that they had a BET specific surface area of 3.1 m²/g, and that according to SEM, particle was a columnar crystal having a column length of 0.6 to 3.8 µm, a column width of 0.25 to 0.35 µm, an aspect ratio of 2 to 10.86 and a columnar degree of 0.73 to 0.89.

### Synthesis Example 7

### (Reaction)

To a zinc chloride aqueous solution-ferric nitrate aqueous solution-hydrochloric acid mixture liquid having a zinc chloride concentration of 1.458 mol/L, a ferric nitrate concentration of 0.0073 mol/L and a hydrochloric acid concentration of 0.025 mol/L was added sodium hydroxide in an amount of 1.4 mol per mole of zinc chloride with stirring, and the resultant mixture was allowed to react at 25°C for 1 hour. A reaction slurry had a pH of 6.02.

### (Cleaning)

The resultant reaction slurry was cleaned by washing it with water.

### (Hydrothermal treatment)

The washed slurry was re-suspended in deionized water and hydrothermally treated at 170°C for 13 hours.

### (Drying)

The thus-obtained product was dehydrated, cleaned and dried. As a result of analysis of the resultant particles, it was found according to X-ray diffraction that the particles were mixture of zinc oxide with a basic zinc hydroxide compound and it was found that they had a BET specific surface area of 7.0 m²/g, and that according to SEM, particle was a columnar crystal having a column length of 0.76 to 3.95 µm, a column width of 0.25 to 0.5 µm, an aspect ratio of 3.03 to 9.88 and a columnar degree of 0.83 to 0.96.

### Comparative Synthesis Example 1

Particles were obtained in the same manner as in Synthesis Example 1 except that the alkali equivalent weight ratio was changed to 1.65. As a result of X-ray diffraction, it was found that the thus-obtained particles were mixture of zinc oxide with a basic zinc hydroxide compound, and according to an SEM photograph, it was found that was a columnar crystal. Table 1 shows properties of the particles.

### Comparative Synthesis Example 2

Particles were obtained in the same manner as in Synthesis Example 1 except that the alkali equivalent weight ratio was changed to 1.70. As a result of X-ray diffraction, it was found that the thus-obtained particles were a mixture of crystals in the shapes of column and those in the shape of cube. Table 1 shows properties of the particles.

### Comparative Synthesis Example 3

### (Reaction)

A zinc chloride aqueous solution-aluminum sulfate mixture liquid having a zinc chloride concentration of 1.05 mol/L and an aluminum sulfate concentration of 0.00525 mol/L, a sodium carbonate aqueous solution having a concentration of 0.746 mol/L and 1.096 N sodium hydroxide were added together with stirring in a manner that the amount of sodium carbonate per mole of zinc chloride was 0.005 mol and that the amount of sodium hydroxide per mole of zinc chloride was 2 mol, and the resultant mixture was allowed to react at 40°C for 30 minutes. A reaction slurry had a pH of 8.63.

### (Cleaning)

The resultant reaction slurry was cleaned by washing it with water.

### (Hydrothermal treatment)

The washed slurry was re-suspended in deionized water and hydrothermally treated at 170°C for 13 hours.

### (Drying)

The resultant product was dehydrated, cleaned and dried to give particles. As a result of X-ray diffraction, it was found that the thus-obtained particles were mixture of zinc oxide with a basic zinc hydroxide compound, and according to an SEM photograph, it was found that particle was a needle-shaped crystal. Table 1 shows the properties of the particles.

### Comparative Synthesis Example 4

Particles were obtained in the same manner as in Synthesis Example 4 except that the aluminum sulfate was not added. As a result of X-ray diffraction, the obtained particles were a mixture of columnar crystals and cubic crystal formed of zinc oxide. Table 1 shows the properties of the particles.

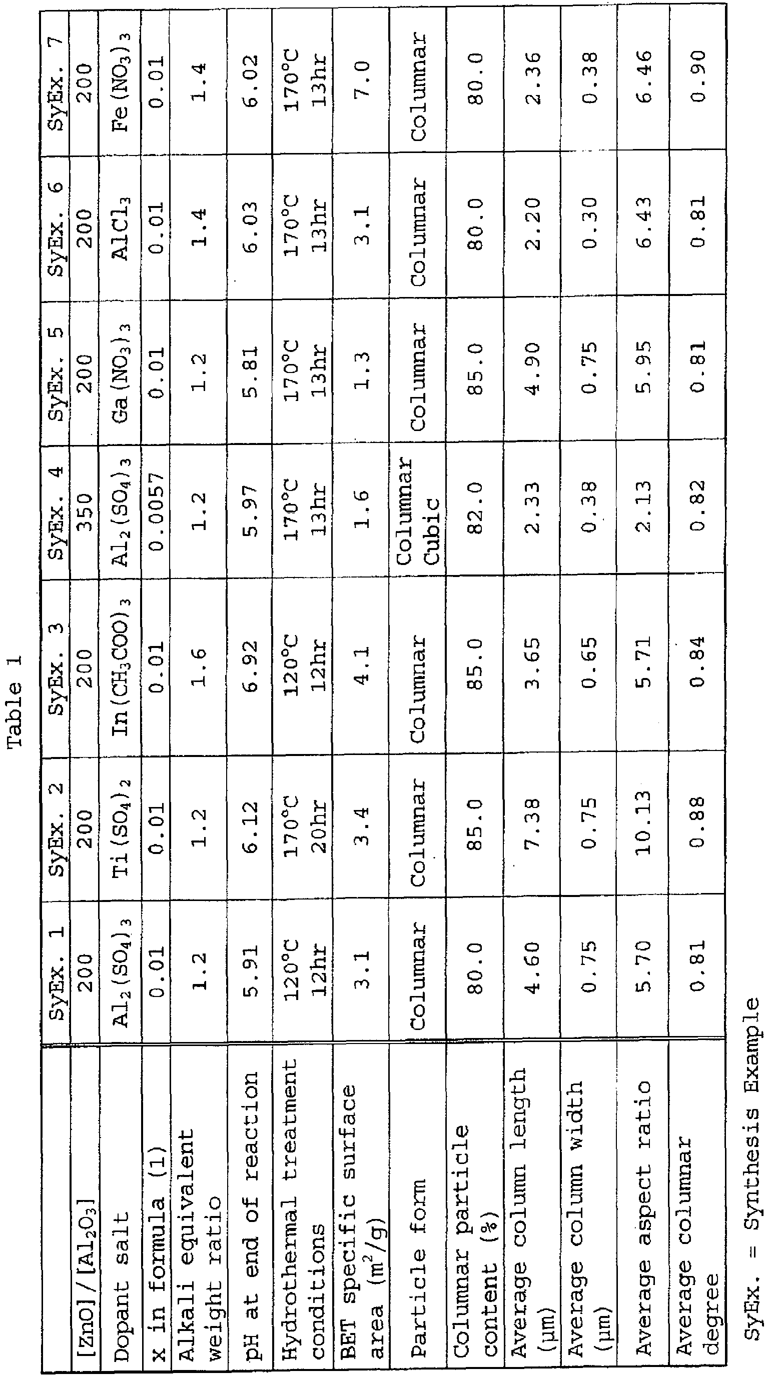

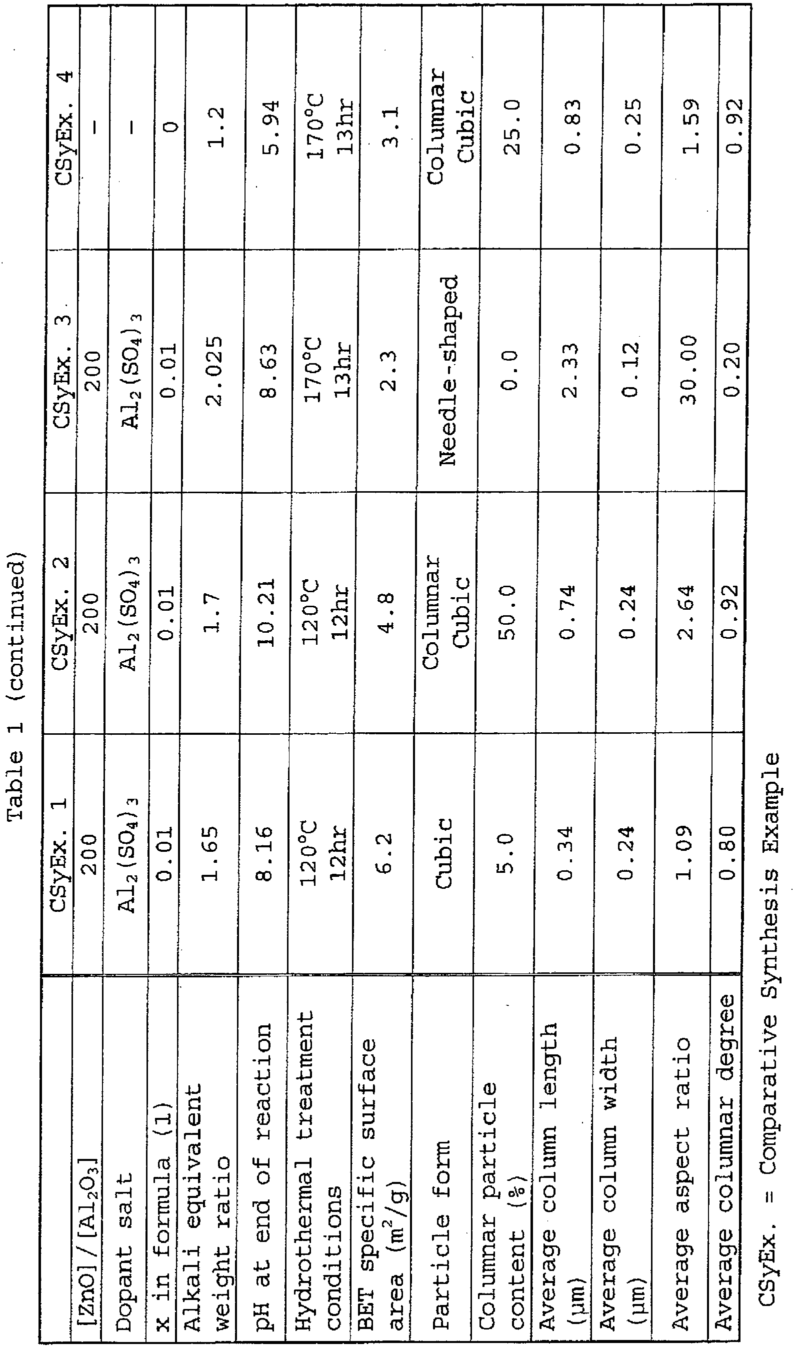

### Example 2

### (Preparation of calcined particles (A))

The particles obtained in Example 1 were calcined under conditions shown in Table 2 to prepare calcined particles (A)-1 to (A)-4 usable as thermal conductivity improving agents. Further, comparative calcined particles (A)-5 and (A)-6 were prepared. These particles were then surface-treated with surface treating agents shown in Table 2.

**Table 2**

| | Calcined particles (A) - 1 | Calcined particles (A) - 2 | Calcined particles (A) - 3 | Calcined particles (A) - 4 | Calcined particles (A) - 5 | Calcined particles (A) - 6 |
|---|---|---|---|---|---|---|
| Zinc oxide | SyEx. 2 | SyEx. 3 | SyEx. 4 | SyEx. 7 | CSyEx. 2 | CSyEx. 3 |
| Calcining conditions | In atmosphere 400°C 4 hours | In atmosphere 800°C 2 hours | In atmosphere 700°C 2 hours | In atmosphere 1100°C 2 hours | In atmosphere 800°C 2 hours | In atmosphere 800°C 2 hours |
| Surface Treating agent | Nil | Sodium oleate | Vinyl-trichlorosilane | Sodium stearate | Nil | Sodium stearate |
| Surface treatment amount (wt%) (based on zinc oxide) | - | 5.0 | 5.0 | 0.1 | - | 0.1 |

| | | | | | | |
|---|---|---|---|---|---|---|
| SyEx. = Synthesis Example, CSyEx. = Comparative Synthesis Example | | | | | | |

### Example 3

### (Preparation of thermally conductive resin composition)

The calcined particles of one of (A)-1 to (A)-6 shown in Table 2 and commercially available zinc oxide (for comparison) in amounts shown in Table 3 were compounded into 100 parts by weight of an industrial silicone polymer (product name: TSE201/GE Toshiba Silicones), and they were kneaded with a plastomill for 1 hour (23 rpm, set temperature 25°C). Further, a curing agent (product name: TC-8/GE Toshiba Silicones) was added, and they were similarly kneaded for 20 minutes. As a commercially available zinc oxide, zinc oxide A (product name: 23-K/Hakusui Tech Co., Ltd.) and zinc oxide B (product name: #1/Seido Chemical Industry Co., Ltd.) were used.

The thus-obtained resin compositions were pressed at 160°C each into the form of a sheet having a diameter of 30 mm and a thickness of 8 mm, and further cured in an oven at 200°C to obtain test pieces. Each test piece was measured for thermal conductivity at 300°C by a hot disc method. Table 3 shows the results.

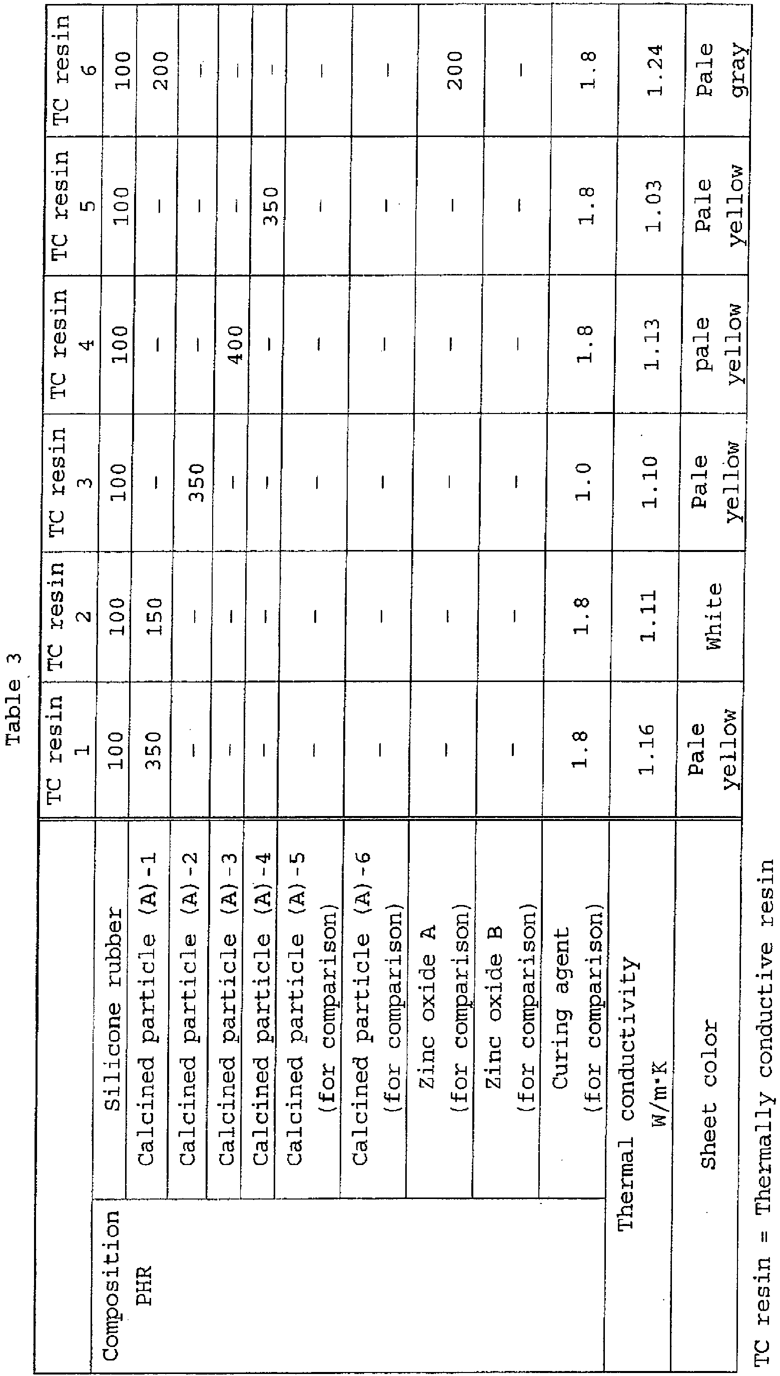

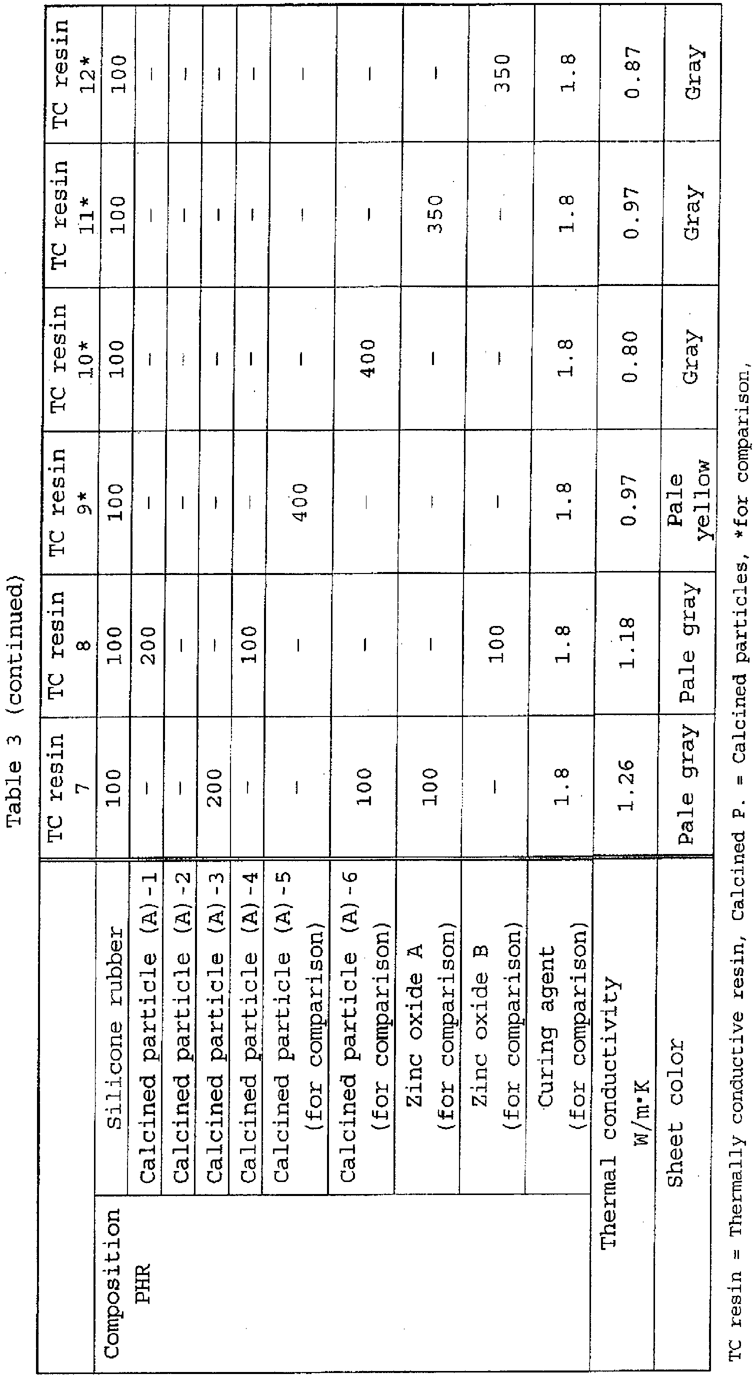

In Table 3, when the thermally conductive resins 1 to 5 are compared with the thermally conductive resins 10 to 12, the resins containing the calcined particles (A) of this invention exhibit higher thermal conductivity than the resins containing conventional needle-shaped zinc oxide or commercially available zinc oxide.

Further, when the calcined particles (A) of this invention are used in combination with the commercially available zinc oxide like the thermally conductive resins 6 to 8, the effect on improvement of the thermal conductivity does not decrease.

It is considered that the above effects are caused by the calcined particles (A) of this invention which is hard to break during kneading, thereby the calcined particles (A) have a lot of chance of contacting with each other in a resin.

### Example 4 (Preparation of calcined particles (B))

The compounds obtained in Example 1 were reduction-calcined under conditions shown in Table 4 to prepare calcined particles (B) usable as electrical conductivity improving agents.

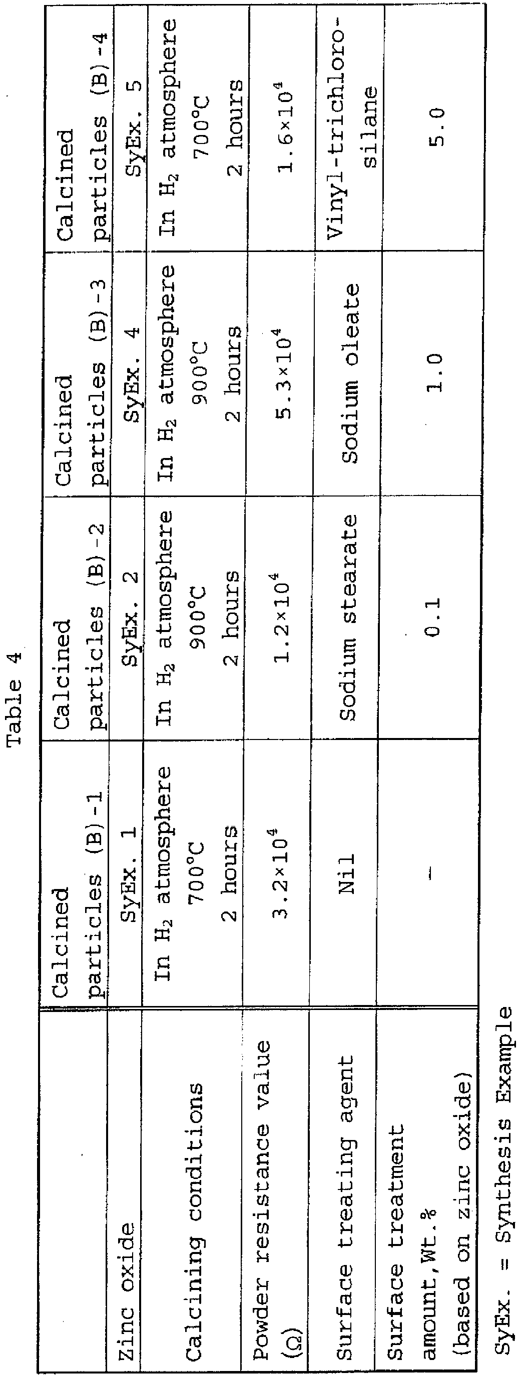

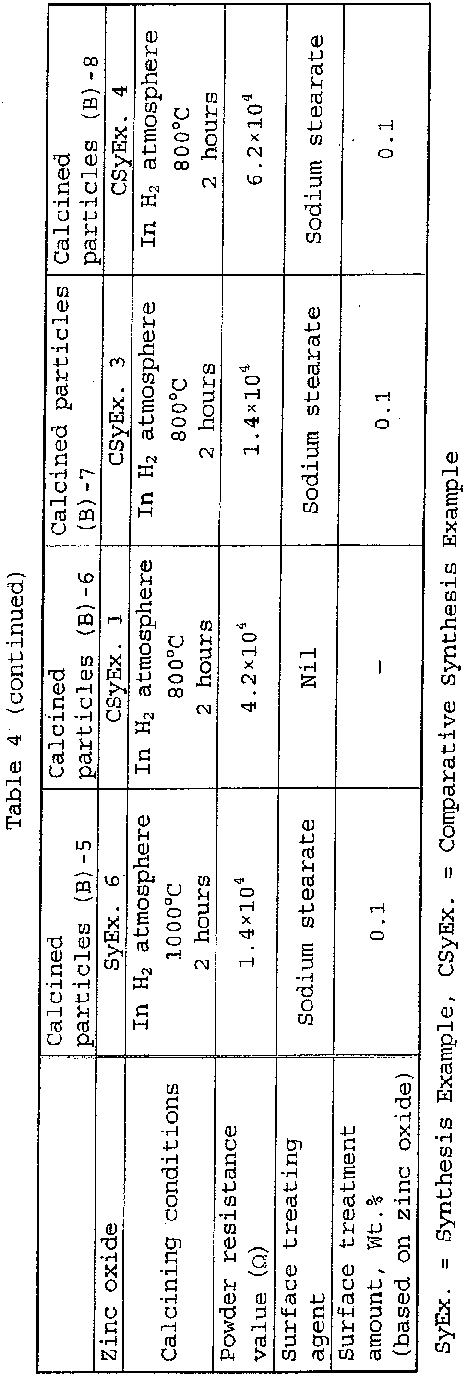

### Example 5 (Electrically conductive resin composition)

The calcined particles of (B)-1 to (B)-8 shown in Table 4 and commercially available zinc oxide (for comparison) in amounts shown in Table 5 were incorporated into 100 parts by weight of a gas phase method linear low-density polyethylene (trade name: NOVATEC LL UF240/supplied by Japan Polyethylene Corporation), and each of the thus-obtained compositions was measured for a inherent volume resistivity. Table 5 shows the results. Zinc oxide A and zinc oxide B are the same as the zinc oxide A and zinc oxide B used in Example 3.

Specifically, pellets of the above low-density polyethylene were placed in a gear oven and pre-heated at 130°C for 30 minutes, and the molten pellets were kneaded with rolls while the calcined particles (B) were added to the molten pellets. Then, the kneaded product was pressed at 190°C into the form of a sheet having a thickness of 2 mm to prepare a test piece.

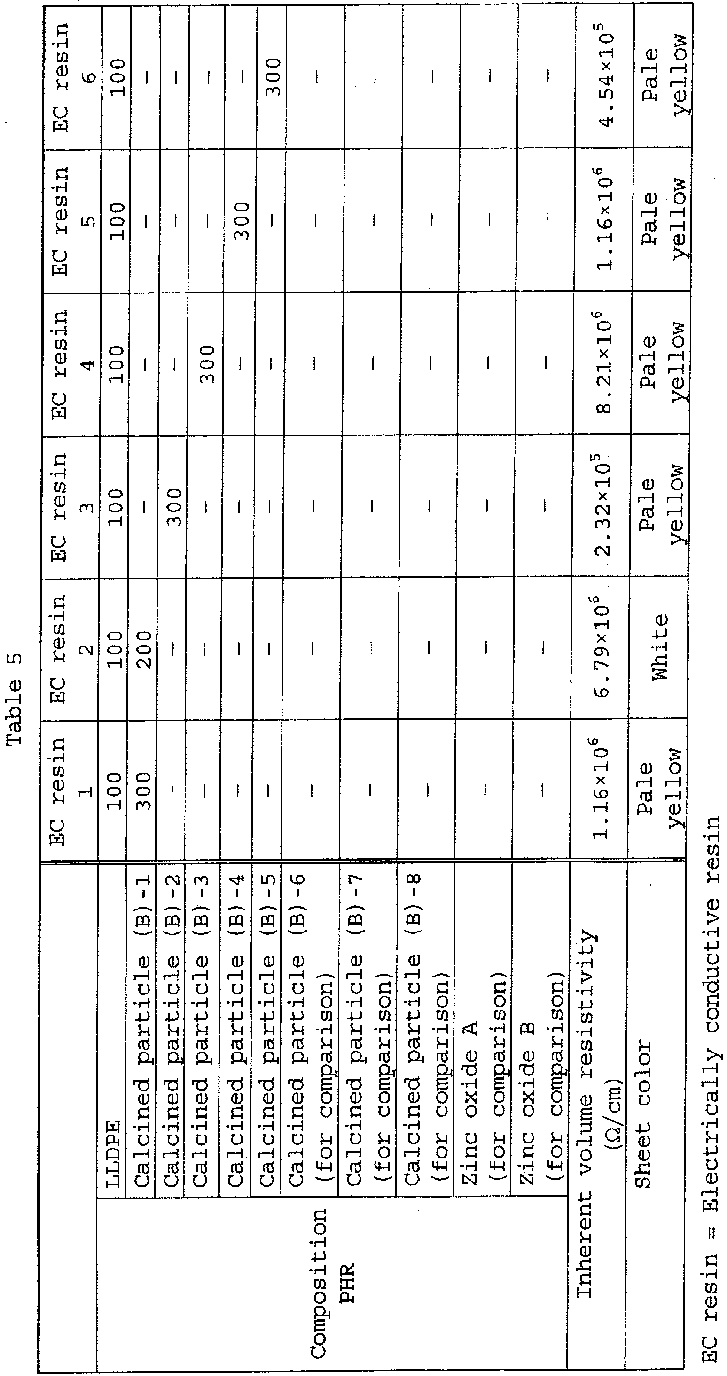

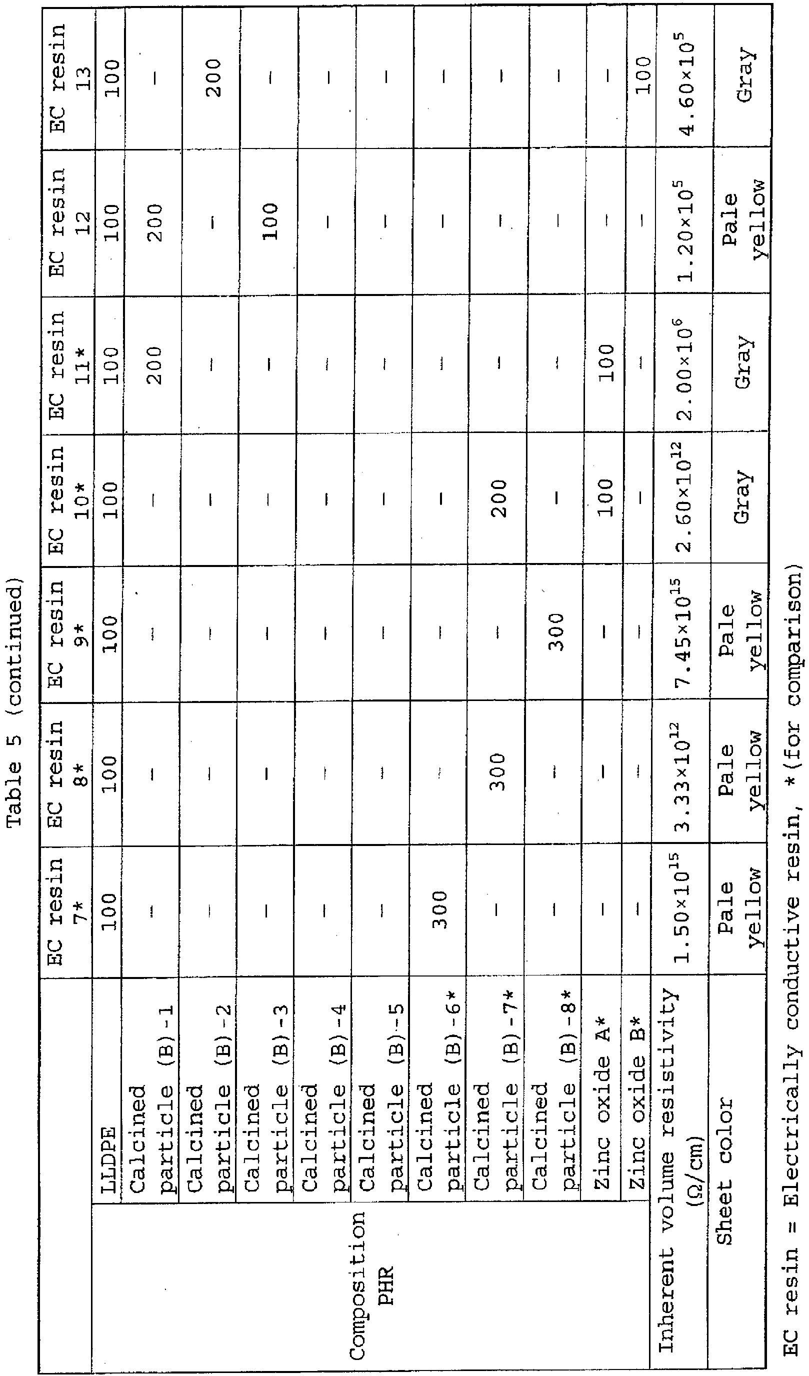

In Table 5, the electrically conductive resin 7 or 9 containing zinc oxide having an average aspect ratio of less than 2 and the electrically conductive resins 8 and 10 containing needle-shaped zinc oxide have inherent volume resistivity in the range of 1 x 10¹² to 1 x 10¹⁶ Ω, while the electrically conductive resins 1 to 6, 12 and 13 containing the calcined particles (B) of this invention have inherent volume resistivity in the range of 1 x 10⁵ to 1 x 10⁷ Ω.

When it is taken into account that there is little difference in powder resistance value between the former and the latter as shown in Table 4, it is considered that the calcined particles (B) of this invention are hard to break during kneading, thereby the calcined particles (B) have a lot of chance of contacting with each other in a resin, resulting in inherent volume resistivity.

### Effect of the Invention

The form of the zinc oxide particles of this invention is unconventionally columnar, and they resist breaking when kneaded with a resin as compared with needle-shaped particles and easily form a network in the resin. Therefore, the zinc oxide particles of this invention are useful as a thermal conductivity improving agent or electrical conductivity improving agent. The zinc oxide particles of this invention can be highly contained in a resin. The columnar zinc oxide particles of this invention have a lower hardness than magnesium oxide or aluminum oxide, so that machines, etc., are in no danger of being abraded. Further, the columnar zinc oxide particles of this invention are safe for human bodies and inexpensive, so that they are used in a broad field.

According to the process for producing particles in this invention, the above zinc oxide particles can be produced. The resin composition of this invention is excellent in thermal conductivity or electrical conductivity.

### Industrial Applicability

The zinc oxide particles of this invention are useful as an improving agent for a resin composition for radiation fins of heat-generating parts such as a power transistor, a thyristor, a rectifier, a transformer, a heater and IC. They are also useful as a static electricity prevention improving agent for electric parts or an electrical conductivity improving agent for electrically conductive floor coating composition.

## Claims

1. Zinc oxide particles represented by the following formula (1),
ZnMⁿ⁺ₓO_{1+nx/2}· aH₂O (1)
wherein Mⁿ⁺ is a trivalent or tetravalent metal, x and "a" satisfy 0.002<x<0.05 and 0≤a<0.5, respectively, and n is a valance of the metal, and having a columnar particle content of 80% or more,
wherein the particles have an average column length of 0.5 to 20 µm, an average column width of 0.25 to 1.5 µm, an average aspect ratio of 2 to 10 and an average columnar degree of 0.7 to 1,
wherein the average columnar degree is the average of columnar degrees measured with regard to 10 or more particles in the field of view magnified 1,000 times or more by means of SEM, wherein the columnar degree is the ratio D₂/D₁ of one end width (diameter) D₂ of the particle to the other end width (diameter) D₁ of the particle.

2. The particles of claim 1, which have the form of a square column or hexagonal column.

3. The particles of claim 1, which have an average column length of 1 to 10 µm, an average column width of 0.5 to 1 µm, and an average aspect ratio of 2 to 6.

4. The particles of claim 1, which have a BET specific surface area of 1 to 10 m²/g.

5. The particles of claim 1, which have at least one coating selected from higher fatty acids, phosphoric esters, fatty acid esters of polyhydric alcohols, anionic surfactants, and silane-, titanate- and aluminum-coupling agents on a surface.

6. A process for producing the zinc oxide particles of claim 1, which comprises the steps of
(I) reacting an aqueous solution containing zinc salt (a) and trivalent or tetravalent metal salt (b) with an aqueous solution containing an alkali metal compound (c) such that the reaction mixture at the end of the reaction has a pH in the range of 5.0 to 7.0,
(II) washing the thus-obtained particles,
(III) emulsifying the washed particles and then hydrothermally treating them, and
(IV) drying the hydrothermally treated particles.

7. Calcined particles (A) obtained by calcining the zinc oxide particles of claim 1 at 300 to 1,100°C in a non-reducing atmosphere.

8. The calcined particles (A) of claim 7, which have at least one coating selected from higher fatty acids, phosphoric esters, fatty acid esters of polyhydric alcohols, anionic surfactants, and silane-, titanate-and aluminum-coupling agents on a surface.

9. A resin composition (A) comprising 100 parts by weight of a resin and 150 to 400 parts by weight of the calcined particles (A) of claim 7.

10. Calcined particles (B) obtained by calcining the zinc oxide particles of claim 1 at 300 to 1,100°C in a reducing atmosphere.

11. The particles (B) of claim 10, which have at least one coating selecting from higher fatty acids, phosphoric esters, fatty acid esters of polyhydric alcohols, anionic surfactants, and silane-, titanate- and aluminum-coupling agent on a surface.

12. A resin composition (B) comprising 100 parts by weight of a resin and 200 to 400 parts by weight of the calcined particles (B) of claim 10.

## Patentansprüche

1. Zinkoxidteilchen der folgenden Formel (1)
ZnMⁿ⁺ₓO_{1+nx/2}·aH₂O (1)
wobei Mⁿ⁺ ein dreiwertiges oder vierwertiges Metall bedeutet, x und a die Bedingungen 0,002<x<0,05 bzw. 0≤a≤0,5 erfüllen und n die Wertigkeit des Metalls bedeutet, wobei der Anteil an säulenförmigen Teilchen 80 % oder mehr beträgt,
wobei die Teilchen eine durchschnittliche Säulenlänge von 0,5 bis 20 µm, eine durchschnittliche Säulenbreite von 0,25 bis 1,5 µm, ein durchschnittliches Seitenverhältnis von 2 bis 10 und einen durchschnittlichen Säulengrad von 0,7 bis 1 aufweisen,
wobei es sich beim durchschnittlichen Säulengrad um den Mittelwert des Säulengrads bei Messung an 10 oder mehr Teilchen in einem durch ein SEM 1000-fach oder mehr vergrößertes Betrachtungsfeld handelt, wobei es sich beim Säulengrad um das Verhältnis D₂/D₁, der Breite (Durchmesser) D₂ an einem Ende des Teilchens zur Breite (Durchmesser) D₁ am anderen Ende des Teilchens, handelt.

2. Teilchen nach Anspruch 1, die die Form einer quadratischen Säule oder hexagonalen Säule aufweisen.

3. Teilchen nach Anspruch 1, die eine durchschnittliche Säulenlänge von 1 bis 10 µm, eine durchschnittliche Säulenbreite von 0,5 bis 1 µm und ein durchschnittliches Seitenverhältnis von 2 bis 6 aufweisen.

4. Teilchen nach Anspruch 1, die eine spezifische BET-Oberfläche von 1 bis 10 m²/g aufweisen.

5. Teilchen nach Anspruch 1, die mindestens einen Überzug, der aus höheren Fettsäuren, Phosphorsäureestern, Fettsäureestern von mehrwertigen Alkoholen, anionischen Tensiden und Silan-, Titanat- und Aluminium-Kupplungsmitteln ausgewählt ist, auf einer Oberfläche aufweisen.

6. Verfahren zur Herstellung der Zinkoxidteilchen nach Anspruch 1, umfassend die folgenden Stufen:
(I) Umsetzen einer wässrigen Lösung mit einem Gehalt an einem Zinksalz (a) und einem Salz eines dreiwertigen oder vierwertigen Metalls (b) mit einer wässrigen Lösung mit einem Gehalt an einer Alkalimetallverbindung (c), so dass das Reaktionsgemisch am Ende der Umsetzung einen pH-Wert im Bereich von 5,0 bis 7,0 aufweist,
(II) Waschen der auf diese Weise erhaltenen Teilchen,
(III) Emulgieren der gewaschenen Teilchen und anschließend hydrothermisches Behandeln der Teilchen und
(IV) Trocknen der hydrothermisch behandelten Teilchen.

7. Calcinierte Teilchen (A), erhalten durch Caclcinieren der Zinkoxidteilchen nach Anspruch 1 bei 300 bis 1100 °C in einer nichtreduzierenden Atmosphäre.

8. Calcinierte Teilchen (A) nach Anspruch 7, die mindestens einen Überzug, der aus höheren Fettsäuren, Phosphorsäureestern, Fettsäureestern von mehrwertigen Alkoholen, anionischen Tensiden und Silan-, Titanat- und Aluminium-Kupplungsmitteln ausgewählt ist, auf einer Oberfläche aufweisen.

9. Harzzusammensetzung (A), umfassend 100 Gew.-teile eines Harzes und 150 bis 400 Gew.-teile der calcinierten Teilchen (A) nach Anspruch 7.

10. Calcinierte Teilchen (B), erhalten durch Calcinieren der Zinkoxidteilchen nach Anspruch 1 bei 300 bis 1100 °C in einer reduzierenden Atmosphäre.

11. Teilchen (B) nach Anspruch 10, die mindestens einen Überzug, der aus höheren Fettsäuren, Phosphorsäureestern, Fettsäureestern von mehrwertigen Alkoholen, anionischen Tensiden und Silan-, Titanat- und Aluminium-Kupplungsmitteln ausgewählt ist, auf einer Oberfläche aufweisen.

12. Harzzusammensetzung (B), umfassend 100 Gew.-teile eines Harzes und 200 bis 400 Gew.-teile der calcinierten Teilchen (B) nach Anspruch 10.

## Revendications

1. Particules d'oxyde de zinc, qui sont représentées par la formule (I) suivante :
ZnMⁿ⁺ₓO_{1+nx/2}•aH₂O (I)
dans laquelle
- Mⁿ⁺ représente un atome de métal trivalent ou tétravalent,
- l'indice x et le coefficient a obéissent respectivement aux inégalités suivantes : 0,002 < x < 0,05 et 0 ≤ a < 0,5,
- et le coefficient n est la valence du métal,
et parmi lesquelles la proportion de particules colonnaires est égale ou supérieure à 80 %,
lesquelles particules présentent une longueur moyenne de colonne valant de 0,5 à 20 µm, une largeur moyenne de colonne valant de 0,25 à 1,5 µm, un rapport d'aspect moyen valant de 2 à 10 et un indice colonnaire moyen valant de 0,7 à 1,
étant entendu que l'indice colonnaire moyen est la valeur moyenne des indices colonnaires mesurés pour 10 particules ou plus, dans le champ de vision grossi 1000 fois ou plus, à l'aide d'un microscope électronique à balayage, l'indice colonnaire étant défini comme le rapport D₂/D₁ de la largeur (diamètre) D₂ d'une particule à l'une de ses extrémités à la largeur (diamètre) D₁ de la particule à l'autre de ses extrémités.

2. Particules conformes à la revendication 1, qui ont la forme d'une colonne carrée ou d'une colonne hexagonale.

3. Particules conformes à la revendication 1, qui présentent une longueur moyenne de colonne valant de 1 à 10 µm, une largeur moyenne de colonne valant de 0,5 à 1 µm, et un rapport d'aspect moyen valant de 2 à 6.

4. Particules conformes à la revendication 1, qui présentent une aire spécifique BET de 1 à 10 m²/g.

5. Particules conformes à la revendication 1, qui portent, sur une surface, au moins un revêtement choisi parmi des acides gras supérieurs, des esters phosphates, des esters d'acides gras et de polyols, des tensioactifs anioniques, et des agents de couplage de type silane, titanate ou dérivé d'aluminium.

6. Procédé de production de particules d'oxyde de zinc conformes à la revendication 1, lequel procédé comporte les étapes suivantes :
I) faire réagir une solution aqueuse contenant
a) un sel de zinc
b) et un sel d'un métal trivalent ou tétravalent avec une solution aqueuse contenant
c) un composé de métal alcalin,
de telle sorte que le mélange réactionnel présente, à la fin de la réaction, un pH situé dans l'intervalle allant de 5,0 à 7,0 ;
II) laver les particules ainsi obtenues ;
III) préparer une émulsion des particules lavées, puis les soumettre à un traitement hydrothermique ;
IV) et faire sécher les particules ayant subi ce traitement hydrothermique.

7. Particules calcinées (A), obtenues par calcination, à une température de 300 à 1100 °C et sous atmosphère non-réductrice, de particules d'oxyde de zinc conformes à la revendication 1.

8. Particules calcinées (A) conformes à la revendication 7, qui portent, sur une surface, au moins un revêtement choisi parmi des acides gras supérieurs, des esters phosphates, des esters d'acides gras et de polyols, des tensioactifs anioniques, et des agents de couplage de type silane, titanate ou dérivé d'aluminium.

9. Composition de résine (A) comprenant 100 parties en poids d'une résine et de 150 à 400 parties en poids de particules calcinées (A) conformes à la revendication 7.

10. Particules calcinées (B), obtenues par calcination, à une température de 300 à 1100 °C et sous atmosphère réductrice, de particules d'oxyde de zinc conformes à la revendication 1.

11. Particules calcinées (B) conformes à la revendication 10, qui portent, sur une surface, au moins un revêtement choisi parmi des acides gras supérieurs, des esters phosphates, des esters d'acides gras et de polyols, des tensioactifs anioniques, et des agents de couplage de type silane, titanate ou dérivé d'aluminium.

12. Composition de résine (B) comprenant 100 parties en poids d'une résine et de 200 à 400 parties en poids de particules calcinées (B) conformes à la revendication 10.
